# EUROPÄISCHE PATENTSCHRIFT

(11) **EP 1 504 937 B1**
(45) Veröffentlichungstag und Bekanntmachung des Hinweises auf die Patenterteilung: **29.04.2009**
(21) Anmeldenummer: 04017979.8
(22) Anmeldetag: 29.07.2004
(51) Int. Cl.: B60H 1/24

(54) **Saugdüse**
Suction nozzle
Buse d'aspiration

(30) Priorität: 06.08.2003 DE 10336379
(43) Veröffentlichungstag der Anmeldung: 09.02.2005
(73) Patentinhaber: Behr GmbH & Co. KG, 70469 Stuttgart (DE)
(72) Erfinder: Burr, Reinhold Dipl-Ing, 89522 Heidenheim (DE); Klingler, Dietrich Dipl.Ing, 73540 Heubach (DE); Voigt, Klaus Dipl-Ing, 74321 Bietigheim-Bissingen (DE)
(74) Vertreter: Grauel, Andreas

(56) Entgegenhaltungen:
- WO-A-92/05044
- CH-A- 294 926
- DE-B- 1 229 868
- PATENT ABSTRACTS OF JAPAN Bd. 1995, Nr. 06, 31. Juli 1995 (1995-07-31) -& JP 07 081370 A (NIPPONDENSO CO LTD), 28. März 1995 (1995-03-28)

## Beschreibung

Die Erfindung betrifft eine Saugdüse, insbesondere zur Absaugung und/oder Belüftung in einem Kraftfahrzeug, gemäß dem Oberbegriff des Anspruchs 1.

Um Geräte, die beispielsweise im Armaturenbrett eines Kraftfahrzeuges angeordnet sind und gegebenenfalls großen Temperaturen ausgesetzt sind, zu kühlen, wird üblicherweise mittels eines Gebläses kühle Luft zugeführt oder die Luft wird mittels eines Gebläses abgesaugt.

Ferner sind Venturi-Düsen bekannt. Der Aufbau einer Normventuri-Düse ist beispielsweise in Dubbel, Taschenbuch für den Maschinenbau, 15. Aufl., 1983, S. 1255, Bild 12c, dargestellt. Die Normventuri-Düse dient insbesondere der Durchflussmessung in weiten Wasserrohren und in Niederdruckgasleitungen.

In JP 7 81370 ist eine Saugdüse nach dem Oberbegriff des Anspruchs 1 offenbart.

Es ist Aufgabe der Erfindung, eine verbesserte Saugdüse zur Verfügung zu stellen.

Diese Aufgabe wird gelöst durch eine Saugdüse mit den Merkmalen des Anspruchs 1. Vorteilhafte Ausgestaltungen sind Gegenstand der Unteransprüche.

Erfindungsgemäß ist eine Saugdüse mit einem Saugrohr und einem Strömungskanal vorgesehen, wobei der Strömungskanal eine Verengung im Bereich eines Endes des Saugrohres aufweist, bei welcher der Strömungskanal bereichsweise gekrümmt oder bogenförmig ausgebildet ist. Ein anderer Bereich des Strömungskanals verläuft dagegen bevorzugt koaxial zum Saugrohr. Durch eine derartig gekrümmte oder bogenförmige Gestalt wird der durch den Strömungskanal geleitete Luft ein gewisser Drall gegeben, so dass sich die Strömungsgeschwindigkeit erhöht und dadurch der Druck in diesem Bereich mit hoher Strömungsgeschwindigkeit verringert. Dadurch erhöht sich die Saugwirkung.

Der Strömungskanal ist im Einströmbereich schräg zum Saugrohr angeordnet, wobei er vorzugsweise in radialer Richtung verläuft. In seinem weiteren Verlauf ist der Strömungskanal zumindest um einen Winkel von 180° um das Saugrohr gebogen oder gewickelt ausgebildet. Dies ermöglicht eine gute Strömungsausbildung mit entsprechendem Drall.

Eine derartige Saugdüse wird insbesondere zur Kühlung von Geräten in Kraftfahrzeugen verwendet. Die Saugdüse kann beispielsweise im Armaturenbrett angeordnet sein. Dabei ist eine Integration in das Belüftungssystem möglich.

Im Folgenden wird die Erfindung anhand eines Ausführungsbeispiels unter Bezugnahme auf die Zeichnung im Einzelnen erläutert. In der Zeichnung zeigen:
- Fig. 1: einen Schnitt durch eine erfindungsgemäße Saugdüse, bei dem der Strömungsverlauf mittels Pfeilen dargestellt ist,
- Fig. 2a-c: verschiedene Ansichten der Düse von Fig. 1, und
- Fig. 3: ein schematisches Diagramm zum Vergleich dreier Absaugvorrichtungen.

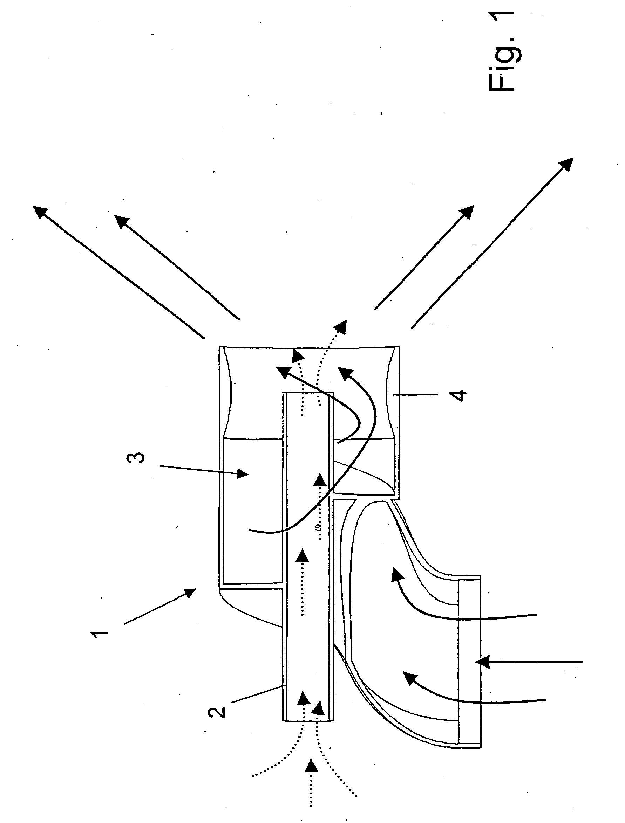

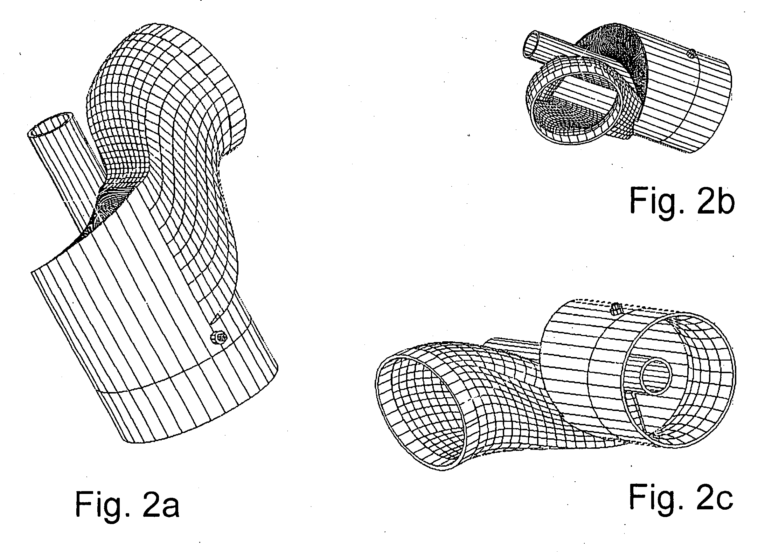

Fig. 1 zeigt einen Schnitt durch eine Saugdüse 1, wobei die Saugdüse 1 ein gerade ausgebildetes Saugrohr 2 und einen gekrümmt verlaufenden Strömungskanal 3 aufweist. Das Saugrohr 2 endet dabei in einer Verengung 4 des Strömungskanals 3, an welcher der Strömungskanal 3 ringförmig verengt ist und koaxial zum Saugrohr 2 verläuft. Das andere Ende des Saugrohres 2 ist beabstandet vom und in einem Winkel zum Einströmbereich des Strömungskanals 3 angeordnet (vgl. Fig. 2a). Die Zuführung des Strömungskanals 3 erfolgt derart, dass die zugeführte Luftströmung einen Drall in Umfangsrichtung des Saugrohres 2 erhält, d.h. die zugeführte Luftströmung hat eine schraubenförmige Bahn.

Durch die hohe Strömungsgeschwindigkeit am Ende des Saugrohres 2 in Folge des Dralls und der Verengung 4 herrscht ein geringer Druck in diesem Bereich, so dass Luft durch das Saugrohr 2 angesaugt wird. Die Abströmung der zugeführten und abgesaugten Luft erfolgt diffus (siehe Fig. 1).

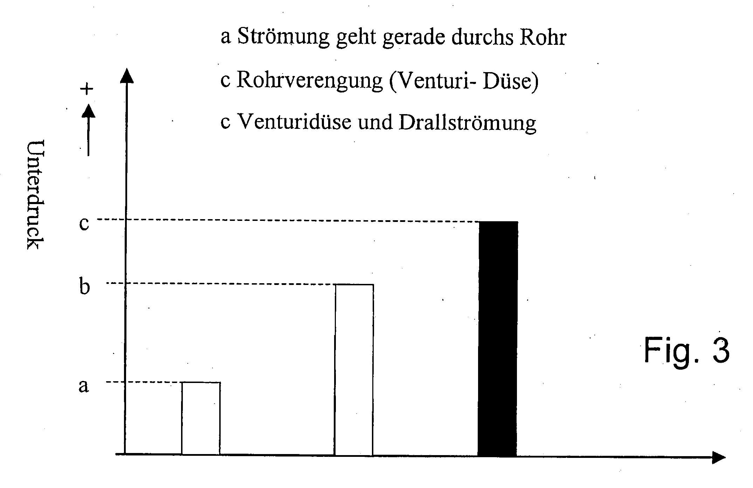

Im Diagramm von Fig. 3 ist der Unterdruck im Saugrohr dargestellt. Im Vergleich ist hierbei eine Strömung die gerade durch ein Rohr strömt (mit a bezeichnet), eine Rohrverengung (Venturi-Düse, mit b bezeichnet) und eine erfindungsgemäße Saugdüse (mit c bezeichnet) dargestellt. Wie aus dem Diagramm von Fig. 3 ersichtlich ist, ist der Unterdruck im Saugrohr 2 bei der erfindungsgemäßen Saugdüse 1 am größten.

## Patentansprüche

1. Saugdüse mit einem Saugrohr (2) und einem Strömungskanal (3), wobei der Strömungskanal (3) eine Verengung (4) im Bereich eines Endes des Saugrohres (2) aufweist, wobei der Strömungskanal (3) bereichsweise gekrümmt oder bogenförmig ausgebildet und in seinem Einströmbereich schräg oder in radialer Richtung bezüglich des Saugrohres (2) angeordnet ist, **dadurch gekennzeichnet, dass** der Strömungskanal (3) in seinem weiteren Verlauf zumindest um einen Winkel von 180° um das Saugrohr (2) gebogen oder gewickelt ausgebildet ist, so dass im Strömungskanal (3) eine Drallströmung geführt ist, wobei diese einen Drall in Umfangsrichtung des Saugrohres (2) erhält.

2. Saugdüse nach Anspruch 1, **dadurch gekennzeichnet, dass** die Verengung (4) über den gesamten Umfang des Strömungskanals (3) ausgebildet ist.

3. Saugdüse nach einem der vorhergehenden Ansprüche, **dadurch gekennzeichnet, dass** das eine Ende des Saugrohres (2) exakt an der engsten Stelle des Strömungskanals (3) endet.

4. Saugdüse nach einem der vorhergehenden Ansprüche, **dadurch gekennzeichnet, dass** das Verhältnis zwischen dem Durchmesser des Saugrohrs (2) zum Durchmesser einer Austrittsöffnung des Strömungskanals (3) kleiner als 0,5 ist.

5. Belüftungssystem für ein Kraftfahrzeug, **gekennzeichnet durch** eine Saugdüse (1) gemäß einem der Ansprüche 1 bis 4.

## Claims

1. Suction nozzle with a suction tube (2) and a flow duct (3), the flow duct (3) having a constriction (4) in the area of one end of the suction tube (2), the flow duct (3) being curved or arc-shaped in one section and being arranged in its inflow area obliquely or in the radial direction relative to the suction tube (2), **characterised in that** further along its length the flow duct (3) is curved or coiled through at least an angle of 180° around the suction tube (2) so that a helical flow passes through the flow duct (3), said flow having a twist in the circumferential direction of the suction tube (2).

2. Suction nozzle according to Claim 1, **characterised in that** the constriction (4) extends around the entire circumference of the flow duct (3).

3. Suction nozzle according to either of the preceding claims, **characterised in that** the said end of the suction tube (2) terminates exactly at the narrowest point of the flow duct (3).

4. Suction nozzle according to any of the preceding claims, **characterised in that** the ratio between the diameter of the suction tube (2) and the diameter of an outlet opening of the flow duct (3) is smaller than 0.5.

5. Ventilation system for a motor vehicle, **characterised in that** it comprises a suction nozzle (1) according to any of Claims 1 to 4.

## Revendications

1. Buse d'aspiration comprenant un tube d'aspiration (2) et un conduit d'écoulement (3), où le conduit d'écoulement (3) présente un rétrécissement (4) dans la zone d'une extrémité du tube d'aspiration (2), où le conduit d'écoulement (3) est configuré, par zones, de façon courbe ou arquée et, dans sa zone d'entrée, disposé de façon oblique ou dans le sens radial par rapport au tube d'aspiration (2),
**caractérisée en ce que** le conduit d'écoulement (3), dans son profil ultérieur, est configuré de façon recourbée ou enroulée autour du tube d'aspiration (2), au moins suivant un angle de 180°, de sorte qu'un écoulement tourbillonnant est guidé dans le conduit d'écoulement (3), où ledit écoulement tourbillonnant subit une turbulence dans la direction circonférentielle du tube d'aspiration (2).

2. Buse d'aspiration selon la revendication 1, **caractérisée en ce que** le rétrécissement (4) est configuré sur toute la circonférence du conduit d'écoulement (3).

3. Buse d'aspiration selon l'une ou l'autre des revendications précédentes, **caractérisée en ce que** l'une des extrémités du tube d'aspiration (2) se termine exactement au niveau de l'endroit le plus étroit du conduit d'écoulement (3).

4. Buse d'aspiration selon l'une quelconque des revendications précédentes, **caractérisée en ce que** le rapport entre le diamètre du tube d'aspiration (2) et le diamètre d'une ouverture de sortie du conduit d'écoulement (3) est inférieur à 0,5.

5. Système de ventilation pour un véhicule automobile, **caractérisé par** une buse d'aspiration (1) selon l'une quelconque des revendications 1 à 4.
